# NEUE EUROPÄISCHE PATENTSCHRIFT

(11) **EP 0 264 384 B2**
(45) Veröffentlichungstag und Bekanntmachung des Hinweises auf die Entscheidung über den Einspruch: **20.03.1996**
(45) Hinweis auf die Patenterteilung: 05.09.1990
(21) Anmeldenummer: 87901347.2
(22) Anmeldetag: 24.02.1987
(51) Int. Cl.: G01D 3/02

(54) **VERFAHREN ZUR TOLERANZKOMPENSATION EINES POSITIONSGEBERSIGNALS**
PROCESS FOR COMPENSATING TOLERANCES OF A POSITION TRANSMITTER SIGNAL
PROCEDE DE COMPENSATION DE TOLERANCES D'UN SIGNAL INDICATEUR DE POSITION

(30) Priorität: 17.04.1986 DE 3612904
(43) Veröffentlichungstag der Anmeldung: 27.04.1988
(73) Patentinhaber: ROBERT BOSCH GMBH, D-70442 Stuttgart (DE)
(72) Erfinder: HAHN, Klaus, D-7582 Bühlertal (DE); KOLBERG, Gerhard, D-7580 Bühl 22 (DE)
(86) Internationale Anmeldenummer: DE8700062
(87) Internationale Veröffentlichungsnummer: WO8706336

(56) Entgegenhaltungen:
- EP-A- 121 938
- EP-A- 185 945
- EP-A- 0 097 479
- DE-A- 2 839 467
- DE-A- 3 301 144
- DE-A- 3 416 495
- DE-A- 3 518 845
- GB-A- 2 013 434
- GB-A- 2 110 383
- US-A- 4 080 658

## Beschreibung

### Stand der Technik

Die Erfindung betrifft ein Verfahren zur Toleranzkompensation eines Positionsgebersignals. Bei Kraftfahrzeugen, welche mit einem elektronischen Gaspedal ausgestattet sind, ist ein mit dem Fahrpedal des Kraftfahrzeugs mechanisch gekoppeltes Potentiometer als Sollwertgeber der Motorleistung eingesetzt (DE-A-34 16 495). Eine Schaltungsanordnung gibt an ihrem Ausgang ein Signal in Abhängigkeit vom Widerstand des Potentiometers aus, welches die Führungsgröße eines Stellregelkreises für die Motorleistung darstellt. Zwischen der Führungsgröße und der Stellung des Fahrpedals muß eine vorgegebene Beziehung eingehalten werden, insbesondere müssen die beiden mechanischen Endanschläge des Fahrpedals exakt dem Leerlauf- und dem Vollastbetrieb des Motors entsprechen. Zur Einhaltung dieser Beziehung muß das Potentiometer mit enger Fertigungstoleranz gefertigt werden, die derzeit bei ±0,5% liegt. Beim Einbau des aus Fahrpedal und Potentiometer bestehenden Positionsgebers in das Kraftfahrzeug ist zudem eine zeitaufwendige mechanische Justierung erforderlich.

Die GB-A-20 13 434 beschreibt ein Verfahren zur Eichung bzw. zum Abgleich von Sensoren. Dabei wird das analoge Sensorsignal mit einem vorgegebenen veränderbaren Signalwert verglichen. Dieser vorgegebene Signalwert wird von einem Prozessor erzeugt, der diesen solange verändert, bis er dem analogen Sensorsignal entspricht. Durch einen Vergleicher wird dieser Zustand erkannt und der dann herrschende Prozessorwert als Eichwert bei der weiteren Verarbeitung des Sensorsignals gespeichert. Handelt es sich bei dem analogen Sensorsignal um ein sinusförmiges Signal, so besteht die Möglichkeit, die Maximal- und Minimalwerte des sinusförmigen Signals entsprechend der oben dargestellten Methode zu ermitteln und aus den Maximal- und Minimalwerten Referenzwerte zu berechnen, die zur Überprüfung der geeichten Signalwerte dienen.

### Vorteile der Erfindung

Das erfindungsgemäße Verfahren mit den Merkmalen des Hauptanspruchs hat den Vorteil, daß die Toleranzkompensation bei jeder neuen Inbetriebnahme der Schaltungsanordnung mit einem Lernalgorithmus selbständig durchgeführt wird. Zunächst werden in einem Schreib-Lesespeicher der Auswerteeinheit zwei Startwerte abgelegt, die vorab als dem Leerlauf- bzw. Vollastanschlag zugeordnete Endwerte des Positionssignals dienen. Werden diese Startwerte nach der Inbetriebnahme durch erfaßte Wegsignale über- bzw. unterschritten, dann werden die alten Endwerte durch neue Werte jeweils überschrieben und als neue den beiden Endanschlägen entsprechende Endwerte des Positionssignales angenommen.

Die zyklische Adaption der den beiden Endanschlägen des Positionsgebers entsprechenden Signale gestattet eine Aufweitung der Einbau- und Fertigungstoleranzen. Das Verfahren ist mit wenig Aufwand zu realisieren und führt insbesondere bei der Serienproduktion in der Automobilindustrie durch einfachere Herstellung des Potentiometers und durch Reduzierung der Einbauzeit zu erheblichen Kosteneinsparungen.

Durch die in den abhängigen Patentansprüchen aufgeführten Maßnahmen sind vorteilhafte Weiterbildungen des im Anspruch 1 angegebenen Verfahrens möglich.

Vorteilhaft ist die Vorgabe von Schwellwerten für das Positionssignal, bei deren Über- und Unterschreitung unmittelbar eine Fehlermeldung ausgegeben wird. Damit sind Fertigungs und Einbaufehler des Positionsgebers nach der ersten Inbetriebnahme sofort zu erkennen.

Weitere Einzelheiten und vorteilhafte Weiterbildungen des erfindungsgemäßen Verfahrens ergeben sich aus der folgenden Beschreibung.

### Zeichnung

Es zeigen Figur 1 eine Schaltungsanordnung zur Durchführung des erfindungsgemäßen Verfahrens, Figur 2 einen funktionalen Zusammenhang zwischen einem Ausgangssignal der Schaltungsanordnung und einem Positionssignal und Figur 3 ein Flußdiagramm des erfindungsgemäßen Verfahrens.

### Beschreibung des Ausführungsbeispiels

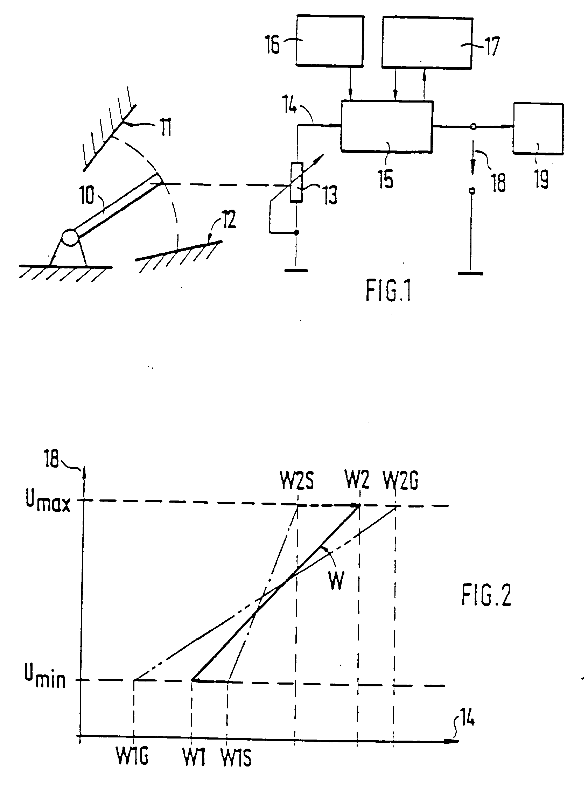

Figur 1 zeigt ein Fahrpedal 10 eines Kraftfahrzeuges, welches zwischen einem ersten und zweiten Anschlag 11, 12 bewegbar ist. Mechanisch gekoppelt mit dem Fahrpedal 10 ist ein Potentiometer 13. Das dem Potentiometer 13 entnehmbare Positionssignal 14 gelangt in eine Auswerteschaltung 15, die einen Festwertspeicher 16 und einen Schreib-Lesespeicher 17 aufweist. Ein Ausgangssignal 18 der Auswerteschaltung 15 gelangt in ein Steuergerät 19.

Figur 2 zeigt den funktionalen Zusammenhang zwischen dem Positionssignal 14 und dem Ausgangssignal 18. Das Ausgangssignal 18 ist begrenzt auf einen minimalen (Uₘᵢₙ) und einen maximalen Wert (Uₘₐₓ). Das Positionssignal 14 ist charakterisiert durch folgende Kennwerte: W1 ist ein dem ersten Endanschlag 11 zugeordneter erster Endwert und W2 ist ein dem zweiten Endanschlag 12 zugeordneter zweiter Endwert des Positionssignal 14. W1S ist ein vorgegebener, im Festwertspeicher 16 abgelegter erster und W2S ist ein vorgegebener, ebenfalls im Festwertspeicher 16 abgelegter zweiter Startwert für den ersten bzw. zweiten Endwert W1, W2. W1G ist ein vorgegebener, im Festwertspeicher 16 abgelegter erster Grenzwert und W2G ist ein vorgegebener, ebenfalls im Festwertspeicher 16 abgelegter zweiter Grenzwert für den ersten bzw. zweiten Endwert W1, W2. Mit W ist ein erfaßter Wert des Positionssignals 14 bezeichnet.

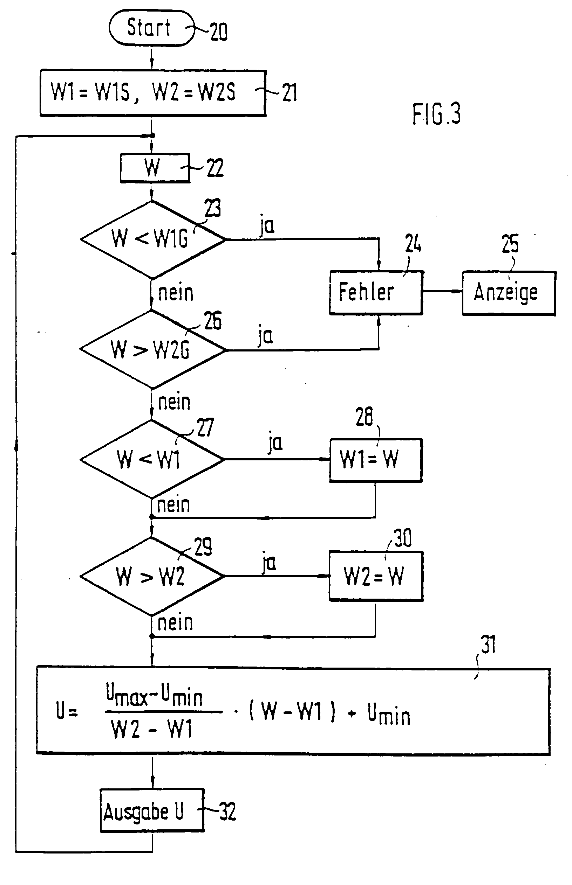

Mit Hilfe des in Figur 3 dargestellten Flußdiagramms wird die Toleranzkompensation des Positionssignals 14 näher erläutert. Nach dem Programmstart 20 wird zunächst im Programmschritt 21 der erste und der zweite Startwert (W1 S, W2S) aus dem Festwertspeicher 16 abgerufen und im Schrieb-Lese-Speicher 17 als Startwert für den ersten und zweiten Endwert W1, W2 abgelegt. Im Programmschritt 22 wird ein Wert W des Positgionssignals 14 erfaßt. Im nächsten Programmschritt 23 wird der aktuelle Wert W mit dem im Festwertspeicher 16 abgelegten ersten Grenzwert W1G verglichen. Der erste Grenzwert W1G ist eine untere Schranke für den dem ersten Endanschlag 11 entsprechenden Wert W des Positionssignals 14. Unterschreitet der Wert W den ersten Grenzwert, so wird ein Fehler 24 erkannt und zur Anzeige 25 gebracht.

Unterschreitet der Wert W den ersten Grenzwert W1G nicht, dann erfolgt im nachfolgenden Programmschritt 26 eine Prüfung auf Überschreitung des zweiten Grenzwertes W2G. Der zweite Grenzwert W2G ist eine obere Schranke für den dem zweiten Endanschlag 12 entsprechenden Wert des Positionssignals, der im Betrieb mit Sicherheit nicht überschritten wird. Liegt der erfaßte Wert W jedoch darüber erfolgt ebenfalls eine Fehlermeldung 24, die zur Anzeige 25 gebracht wird. Ein aufgetretener Fehler 24 weist darauf hin, daß entweder die Fertigungstoleranz des Potentiometers 13 und/oder die Einbautoleranz des Positionsgebers 10, 13 überschritten worden ist.

Ist bis zum Programmschritt 26 kein Fehler durch Unter- bzw. Überschreiten des ersten bzw. zweiten Grenzwertes W1G, W2G aufgetreten, dann beginnt mit dem nachfolgenden Programmschritt 27 das Lernprogramm für die dem ersten und zweiten Endanschlag 11, 12 zugeordneten Endwerte W1, W2. Unterschreitet der gemessene Wert W den im Schreib-Lesespeicher 10 abgelegten ersten Endwert W1, so wird im nächsten Programmschritt 28 der bisherige erste Endwert W1 mit dem gemessenen Wert W überschrieben. In dem weiteren Programmschritt 29 wird der gemessene Wert W verglichen mit dem im Schreib-Lesespeicher 17 abgelegten zweiten Endwert W2. Überschreitet der gemessene Wert W den gespeicherten zweiten Endwert W2, so wird im Programmschritt 30 der gespeicherte Wert W2 mit dem gemessenen Wert W überschrieben. Mit dem zyklischen Durchlaufen der Programmschritte 27, 29 und gegebenenfalls 28 und 30 wird der dem ersten Endanschlag 11 entsprechende erste Endwert W1 und der dem zweiten Endanschlag 12 entsprechende zweite Endwert W2 gelernt.

Im nächsten Programmschritt 31 wird das korrigierte Positionssignal U als Ausgangssignal 18 der Auswerteschaltung 15 ermittelt. Der gemessene Wert W des Positionssignals 14 wird bezogen auf die beiden Endwerte W1, W2 sowie auf den minimalen und maximalen Wert Uₘᵢₙ, Uₘₐₓ des Ausgangssignals 18 normiert. Das korrigierte Signal U ergibt sich aus der linearen Interpolation zwischen den beiden Wertepaaren W2, Uₘₐₓ und W1, Uₘᵢₙ unter Berücksichtigung des Minimalwertes Uₘᵢₙ des Ausgangssignals 18. Der Minimale und maximale Wert Uₘₐₓ, Uₘᵢₙ können im Festwertspeicher 16 abgelegt sein und jeweils im Programmschritt 31 abgerufen werden. Eine Vereinfachung ist gegeben durch Nullsetzen des minimalen Wertes Uₘᵢₙ. Im letzten Programmschritt 32 wird der korrigierte Positionswert U als Ausgangssignal 18 abgegeben und gelangt in ein Steuer- oder Regelgerät 19.

Ändert sich während des Fahrbetriebs der erste und zweite Endwert W1, W2 des entsprechenden ersten und zweiten Endanschlages 11, 12 durch Temperatureeinflüsse oder beispielsweise mechanische Dejustierung, erfolgt in zyklischen Programmdurchläufen eine Korrektur des ersten bzw. zweiten Endwerte W1, W2.

In dem Ausführungsbeispiel des erfindungsgemäßen Verfahrens nach Figur 3 erfolgt eine Korrektur des ersten und zweiten Endwertes W1, W2 nur dann, wenn der erfaßte Wert W kleiner als der gespeicherte erste Endwert W1 und größer als der gespeicherte zweite Endwert W2 ist. Eine im Fahrbetrieb auftretende Forderung nach Erhöhung des ersten Endwertes W1 bzw, nach einer Senkung des zweiten Endwertes W2 kann in dem erfindungsgemäßen Verfahren berücksichtigt werden durch Einbau eines Zeitgliedes in den zyklisch durchlaufenen Teil des Flußdiagramms nach Figur 3. Erreicht nach vorgebbarer Zeit der Wert W des Positionssignals 14 einen oder beide gespeicherten Endwerte W1, W2 nicht mehr, dann werden die Endwerte W1, W2 auf ihre Startwerte W1S, W2S zurückgesetzt. Im Fahrbetrieb sind durch die gegebenenfalls auftretenden Rücksetzungen der Endwerte W1, W2 keine Auswirkungen zu befürchten, wenn die Zeit für einen Programmdurchlauf kleiner ist als die kleinste vorkommende mechanische Zeitkonstante des Gesamtsystems.

Die beiden Endanschläge 11, 12 des Fahrpedals 10 stimmen zweckmäßigerweiese nicht mit den Endanschlägen des Potentiometers 13 überein. Benutzt wird nur ein bestimmter Teil des möglichen Potentiometerweges. Durch diese Maßnahme ist eine genaue Justierung des Fahrpedals 10 in bezug auf das Potetiometer 13 nicht erforderlich.

## Patentansprüche

1. Verfahren zur Kompensation der Toleranz eines ein Positionssignal (14) erzeugenden Positionsgebers, der aus einem mit einem Fahrpedal (10) eines Kraftfahrzeugs gekoppelten Potentiometer (13) als Sollwertgeber einer Motorleistungssteuerungs- oder Regelungsanlage besteht und der ein Positionssignal als Führungsgröße eines Stellregelkreises für die Motorleistung ausgibt, wobei das Fahrpedal (10) zwei Endanschläge (11, 12) aufweist und wobei die Toleranzkompensation in einer Auswerteeinheit erfolgt, bestehend aus den Schritten:
- Übernahme von Startwerten (W1S W2S) in einen Schreib-Lese-Speicher (17) als die Endanschläge repräsentierende Endwerte, wobei die Startwerte in einem Festwertspeicher (16) abgelegt und den Endanschlägen zugeordnet sind,
- Zyklischer Vergleich des Positionssignalwertes mit wenigstens einem der im Schreib-Lesespeicher abgelegten Endwerte, - Löschen des im Schreib-Lesespeicher abgelegten verglichenen Endwertes dann, wenn der Positionssignalwert den verglichenen Endwert überschreitet,
- Ablegen dieses Positionssignalwerts als neuen Endwert im Schreib-Lesespeicher,
- Berechnung eines korrigierten Positionssignals als Ausgangssignal (18) durch lineare Interpolation des Positionssignals zwischen dem den Endanschlägen zugeordneten im Schreib-Lesespeicher (17) befindlichen Endwerten (W1, W2).

2. Verfahren nach Anspruch 1, dadurch gekennzeichnet, daß der im Festwertspeicher (16) abgelegte Startwert (W1S) ein erster Startwert ist, der über einem Wert liegt, welcher dem ersten Endwert (W1) des Positionssignals (14) des am ersten Endanschlag (11) anliegenden Positionsgebers (10, 13) entspricht.

3. Verfahren nach einem der Ansprüche 1 bis 2, dadurch gekennzeichnet, daß der im Festwertspeicher (16) abgelegte Startwert (W2S) ein zweiter Startwert ist, der unter einem Wert liegt, welcher dem zweiten Endwert (W2) des Positionssignals (14) des am zweiten Endanschlag (12) anliegenden Positionsgebers (10, 13) entspricht.

4. Verfahren nach einem der Ansprüche 1 bis 3,
dadurch gekennzeichnet,
a) daß für wenigstens einen der mechanischen Endanschläge (11, 12) des Positionsgebers (10, 13) ein Grenzwert (W1G, W2G) im Festwertspeicher (16) der Auswerteschaltung (15) abgelegt wird.
b) daß der im Festwertspeicher (16) hinterlegte Grenzwert (W1G, W2G) zyklisch mit dem Wert des Positionssignals (14) verglichen wird und
c) daß bei Überschreitung des Grenzwertes (W1G, W2G) eine Fehlermeldung (24, 25) ausgegeben wird.

## Claims

1. Process for compensating the tolerance of a position transmitter generating a position signal (14), which consists of a potentiometer (13), coupled to an accelerator (10) of a motor vehicle, as setpoint generator of an engine-output open-loop or closed-loop control system, and which emits a position signal as a reference variable of an adjusting control loop for the engine output, the accelerator (10) having two limit stops (11, 12) and the compensating of tolerances taking place in an evaluation unit, comprising the steps:
- transfer of start values (W15, W25) into a read-write memory (17) as the end values representing the limit stops, the start values being stored in a read-only memory (16) and allocated to the limit stops,
- cyclic comparison of the position-signal value with at least one of the end values stored in the read-write memory,
- deletion of the compared end value stored in the read-write memory if the position signal value overshoots the compared end value,
- storage of this position-signal value as new end value in the read-write memory,
- calculation of a corrected position signal as output signal (18) by linear interpolation of the position signal between the end values (W1, W2) allocated to the limit stops and located in the read-write memory (17).

2. Process according to Claim 1, characterized in that the start value (W1s), stored in the read-only memory (16), is a first start value which lies above a value (W1) of the position signal (14) of the position transmitter (10, 13) against the first limit stop (11).

3. Process according to either of Claims 1 and 2, characterized in that the start value (W2S) stored in the read-only memory (16) is a second start value, which lies below a value which corresponds to the second end value (W2) of the position signal (14) of the position transmitter (10, 13) against the second limit sop (12).

4. Process according to one of Claims 1 to 3, characterized in that
a) a limit value (W1G, W2G) is stored in the read-only memory (16) of the evaluation circuit (15) for at least one of the mechanical limit stops (11, 12) of the position transmitter (10, 13),
b) the limit value (W1G, W2G) stored in the read-only memory (16) is cyclically compared with the value of the position signal (14) and
c) if the limit value (W1G, W2G) is overshot, an error message (24, 25) is emitted.

## Revendications

1. Procédé de compensation des tolérances d'un indicateur de position générant un signal de position (14) qui est constitué par un potentiomètre (13), couplé à une pédale (10) d'accélérateur d'un véhicule automobile, potentiomètre jouant le rôle d'émetteur de la valeur de consigne d'une installation de commande ou de régulation de la puissance du moteur et qui émet un signal de position comme grandeur guide d'un circuit de régulation de la puissance du moteur, la pédale (10) comportant au moins une butée terminale (11, 12) et la compensation des tolérances s'effectuant dans une unité d'exploitation, procédé comportant les étapes suivantes :
- réception des valeurs de démarrage (W1S, W2S) dans une mémoire à lecture-écriture (17) en tant que valeur terminale représentant les butées terminales, les valeurs de démarrage étant déposées dans une mémoire (16) de constantes et étant associées aux butées terminales,
- comparaison cyclique de la valeur du signal de position avec au moins l'une des valeurs terminales déposées dans la mémoire à lecture-écriture,
- effacement de la valeur terminale déposée dans la mémoire à lecture-écriture, lorsque la valeur du signal de position dépasse cette valeur terminale,
- dépôt de cette valeur du signal de position, en tant que nouvelle valeur terminale, dans la mémoire à lecture-écriture,
- calcul d'un signal de position, corrigé comme signal de sortie (18) par interpolation linéaire du signal de position entre les valeurs terminales (W1, W2) associées aux butées terminales dans la mémoire à lecture-écriture (17).

2. Procédé selon la revendication 1, caractérisé en ce que la valeur de démarrage (W1S) déposée dans la mémoire des constantes (16) est une première valeur de démarrage, qui se situe au-dessus d'une valeur correspondant à la première valeur terminale (W1) du signal de position (14) de l'indicateur de position (10, 13) s'appliquant contre la première butée terminale (11).

3. Procédé selon une des revendications 1 à 2, caractérisé en ce que la valeur de démarrage (W2S) déposée dans la mémoire des constantes (16) est une seconde valeur de démarrage, qui se situe en dessous d'une valeur correspondant à la seconde valeur terminale (W2) du signal de position (14) de l'indicateur de position (10, 13) s'appliquant contre la seconde butée terminale (12).

4. Procédé selon une des revendications 1 à 3, caractérisé en ce que :
a) pour au moins d'une des butées terminales mécaniques (11, 12) de l'indicateur de position (10, 13), une valeur limite (W1G, W2G) est déposée dans la mémoire des constantes (16) du circuit d'exploitation (15),
b) la valeur limite (W1G, W2G) déposée dans la mémoire des constantes (16) est comparée cycliquement à la valeur du signal de position (14),
c) en cas de dépassement de la valeur limite (W1G, W2G), une signalisation d'erreur (24, 25) est émise.
